# EUROPÄISCHE PATENTANMELDUNG

(11) **EP 3 929 116 A2**
(43) Veröffentlichungstag der Anmeldung: **29.12.2021**
(21) Anmeldenummer: 21167090.6
(22) Anmeldetag: 07.04.2021
(51) Int. Cl.: B65G 47/08, B65G 47/51, B65G 47/53, B65G 47/71, B65G 54/02, B65G 43/08

(54) **VERFAHREN UND VORRICHTUNG ZUM PUFFERN VON BEHÄLTERN**

(30) Priorität: 22.06.2020 DE 102020207679
(71) Anmelder: KRONES AG, 93073 Neutraubling (DE)
(72) Erfinder: Lautenschlager, Franz, 93073 Neutraubling (DE); Herrmann, Thekla, 93073 Neutraubling (DE); Seger, Martin, 93073 Neutraubling (DE); Kilgenstein, Torsten, 93073 Neutraubling (DE); Muehlstein, Peter, 93073 Neutraubling (DE)
(74) Vertreter: Grünecker Patent- und Rechtsanwälte PartG mbB

(57) **Zusammenfassung**

Beschrieben werden ein Verfahren und eine Vorrichtung zum Puffern von Behältern in einer Behälterbehandlungsanlage. Demnach werden Behälter auf wenigstens einem Einlaufförderband in Einlaufrichtung eingespeichert, auf einer sich quer daran anschließenden Pufferfläche von Schienen geführten und einzeln angetriebenen Shuttles mit Reihenschiebern in einer zur Einlaufrichtung quer verlaufenden Pufferrichtung einreihig verschoben und auf wenigstens einem in Pufferrichtung quer daran anschließenden Auslaufförderband ausgespeichert. Dadurch, dass die Shuttles, das Einlaufförderband und das Auslaufförderband in Abhängigkeit von spezifisch für das Format und/oder Material der Behälter gespeicherten Sollpositionen, Sollgeschwindigkeiten und/oder Sollbeschleunigungen/Verzögerungen gesteuert werden, und/oder die Shuttles in Abhängigkeit von spezifisch für Betriebsarten zum Initialisieren und insbesondere Auslesen der Shuttles, zum Folgen vorauslaufender Shuttles und zum Anfahren von Streckenpositionen gespeicherten Sollpositionen, Sollabständen und/oder Sollgeschwindigkeiten gesteuert werden, ist eine für unterschiedliche Behältertypen und für die einzelnen Betriebsweisen optimierte Steuerung von Bewegungsmustern im Bereich des Einlaufförderbands, Auslaufförderbands und der Pufferfläche gegeben.

## Beschreibung

Die Erfindung betrifft ein Verfahren und eine Vorrichtung zum Puffern von Behältern in einer Behälterbehandlungsanlage gemäß dem Oberbegriff des Anspruchs 1 bzw. 12.

Ein gattungsgemäßes Verfahren und eine gattungsgemäße Vorrichtung sind aus der DE 10 2018 211 859 A1 bekannt. Demnach können einreihige Behältergruppen, beispielweise bestehend aus Getränkeflaschen, mittels quer ausgerichteter Reihenschieber ohne Staudruck über eine Pufferfläche geschoben werden. Im Zusammenhang mit einem jeweils quer zur Pufferrichtung ausgerichteten Behältereinlauf und Behälterauslauf ergibt sich so eine Puffervorrichtung, die Behälterströme bei effizienter Platzausnutzung, beispielsweise nach dem First-in-first-out-Prinzip, puffern kann.

Als problematisch hat sich jedoch insbesondere die Anpassung des Verfahrens und der Vorrichtung an unterschiedliche Behältertypen und die Optimierung bezüglich unterschiedlicher Betriebszustände, beispielsweise beim Initialisieren des Transportsystems, beim Anfahren einzelner Streckenpositionen am Transportsystem und/oder beim Folgebetrieb, in dem einzelne Shuttles automatisch vorauslaufenden Shuttles in einem bestimmten Abstand zueinander folgen sollen. Beispielsweise wäre es wünschenswert, die Bewegungsabläufe der Shuttles, vorhandener Einlaufförderbänder und/oder Auslaufförderbänder, insbesondere deren Beschleunigungsrampen und/oder Verzögerungsrampen an die zu verarbeitenden Behältertypen anzupassen, um die Abläufe beim Einspeichern, Puffern und Ausspeichern einerseits möglichst schnell durchführen zu können und andererseits die Behälter nicht zu beschädigen und ein Umfallen der Behälter zu vermeiden.

Die gestellte Aufgabe wird mit einem Verfahren gemäß Anspruch 1 und mit einer Vorrichtung gemäß Anspruch 12 gelöst.

Das Verfahren dient zum Puffern einreihig gruppierter Behälter in einer Behälterbehandlungsanlage, insbesondere Abfüllanlage. Zu diesem Zweck werden die Behälter auf wenigstens einem Einlaufförderband in Einlaufrichtung eingespeichert, auf einer sich quer daran anschließenden Pufferfläche von Schienen geführten und einzeln angetriebenen Shuttles mit Reihenschiebern in einer zur Einlaufrichtung quer verlaufenden Pufferrichtung einreihig verschoben, also unter Einhaltung einer räumlichen Trennung zwischen einzelnen Behälterreihen, und auf wenigstens einem in Pufferrichtung quer daran anschließenden Auslaufförderband ausgespeichert.

Erfindungsgemäß werden die Shuttles, das Einlaufförderband und das Auslaufförderband in Abhängigkeit von spezifisch für das Format und/oder Material der Behälter gespeicherten Sollpositionen, Sollgeschwindigkeiten und/oder Sollbeschleunigungen gesteuert. Ergänzend oder alternativ werden die Shuttles in Abhängigkeit von spezifisch für Betriebsarten zum Initialisieren und insbesondere Auslesen der Shuttles, zum Folgen vorauslaufender Shuttles und zum Anfahren von Streckenpositionen gespeicherten Sollpositionen, Sollabständen und/oder Sollgeschwindigkeiten gesteuert.

Somit lassen sich die Bewegungsprofile der Shuttles, des Einlaufförderbands und des Auslaufförderbands dahingehend optimieren, dass die Behälter möglichst schnell ihre jeweiligen Sollpositionen beim Einspeichern, Puffern und Ausspeichern anfahren und gleichzeitig ein unzulässiger Staudruck der Behälter und/oder ein Umfallen der Behälter vermieden werden kann. Beispielsweise kann sich das Kippverhalten einzelner Behältertypen voneinander unterscheiden, so dass die einzelnen Behältertypen unterschiedlich schnell beim Einspeichern, Puffern und/oder Ausspeichern beschleunigt/verzögert werden können, bevor das Risiko, dass die Behälter umfallen, zu groß wird. Entsprechend können Beschleunigungsrampen und Verzögerungsrampen des Einlaufförderbands und des Auslaufförderbands in Abhängigkeit vom jeweiligen Behältertyp ebenso wie die damit jeweils verbundenen Maximalgeschwindigkeiten der Behälter optimiert werden.

Die Steuerung der Shuttles erfolgt hierbei vorzugsweise mittels einer übergeordneten Master-Steuerung zur Vorgabe von Bewegungsparametem der Shuttles, wie beispielsweise von Sollpositionen, Sollgeschwindigkeiten und/oder Sollverzögerungen und an den Shuttles vorhandene, untergeordnete Slave-Regelungen zum Regeln der Antriebe der Shuttles auf der Grundlage der von der Master-Steuerung derart vorgenommenen Parametrierung.

Vorzugsweise werden Maximalwerte für die Verzögerung und/oder Beschleunigung und/oder Geschwindigkeit des Einlaufförderbands und/oder Auslaufförderbands und/oder der Shuttles aus wenigstens einem der folgenden Parameter spezifisch für zur verarbeitende Behältertypen berechnet und behältertypspezifisch abrufbar gespeichert: Höhe, Gewicht, Schwerpunkt, Kippwinkel, Material, Hüllkurvenkontur, Bodengeometrie, nominelle Füllhöhe und/oder Material des Behältertyps. Die Berechnung und/oder das Abrufen der Maximalwerte erfolgt dabei insbesondere unter Berücksichtigung wenigstens eines Reibwerts des Einlaufförderbands, des Auslaufförderbands, der Pufferfläche, eines dem Einlaufförderband vorgelagerten Förderbands und/oder eines dem Auslaufband nachgelagerten Förderbands.

Somit können die Bewegungsprofile der Shuttles und/oder des Einlaufförderbands und/oder des Auslaufförderbands, insbesondere deren Beschleunigungsrampen und/oder Verzögerungsrampen spezifisch an die Eigenschaften der Behälter und/oder der beteiligten Förderflächen, also beispielsweise des Einlaufförderbands, des Auslaufförderbands und der Pufferfläche optimiert werden.

Eine derartige Optimierung ist beispielsweise bei erstmaliger Durchführung des Verfahrens / bei der Inbetriebnahme der zugehörigen Vorrichtung möglich, ebenso im laufenden Betrieb bei Formatwechseln, nach Instandhaltungsmaßnahmen oder dergleichen.

Somit lassen sich die Bewegungsprofile der Behälter beim Einspeichern, Puffern und Ausspeichern flexibel und gegebenenfalls dynamisch an die Eigenschaften der Behälter und des Einlaufförderbands / des Auslaufförderbands / der Pufferfläche anpassen.

Vorzugsweise werden die Werte der für die Berechnung der Maximalwerte verwendeten Parameter aus Messungen an den Behälter des jeweiligen Behältertyps in der Behälterbehandlungsanlage ermittelt, aus einer Datenbank mit Behältereigenschaften abgerufen und/oder auf der Grundlage statistischer Auswertungen von Behandlungsergebnissen mit dem Behältertyp in zuvor in Betrieb genommenen Behälterbehandlungsanlagen ermittelt.

Dadurch können die Bewegungsprofile der Behälter beim Einspeichern, Puffern und Ausspeichern sowohl spezifisch für die jeweilige Puffereinrichtung als auch auf der Grundlage diesbezüglich unspezifischer Daten und/oder mit vergleichbaren Behälterbehandlungsanlagen gewonnenen Erfahrungen optimiert werden.

Beispielsweise können die für die Parametrierung der Bewegungsprofile eingesetzten Daten mit einer steigenden Anzahl in Betrieb genommener Puffereinrichtungen bzw. damit ausgestatteter Behälterbehandlungsanlagen auf statistischer Grundlage präzisiert und dadurch die Aussagekraft der zugrundeliegenden Berechnungen beispielsweise bereits bei der Erstinbetriebnahme erhöht werden.

Vorzugsweise werden die Sollpositionen, Sollgeschwindigkeiten, Sollbeschleunigungen und/oder Sollverzögerungen der Shuttles, des Einlaufförderbands und des Auslaufförderbands auf der Grundlage der berechneten Maximalwerte ermittelt und insbesondere mit Sollpositionen, Sollgeschwindigkeiten, Sollbeschleunigungen und/oder Sollverzögerungen der Behälter in vorgelagerten und/oder nachgelagerten Transportstrecken und/oder Verteileinheiten für die Behälter abgeglichen.

Somit können praktikable Bewegungsprofile der Behälter unter Berücksichtigung der Maximalwerte und unter der Maßgabe einer Leistungsoptimierung beim Einspeichern, Puffern und Ausspeichern für unterschiedliche Behältertypen und/oder unterschiedliche Betriebsweisen angepasst werden.

Ein Abgleich der derart ermittelten Sollwerte mit entsprechenden Sollwerten vorgelagerter und/oder nachgelagerter Transportstrecken/ Verteileinheiten ermöglicht eine Plausibilisierung der ermittelten Bewegungsprofile und vermeidet punktuelle Überkapazitäten und/oder Unterkapazitäten bezüglich stromaufwärts und/oder stromabwärts angeschlossener Behandlungseinheiten der Behälterbehandlungsanlage. So lässt sich das Einspeichern, Puffern und/oder Ausspeichern der Behälter beispielsweise bezüglich eines stromaufwärts angeordneten Maschinenblocks zum Herstellen, Abfüllen und Ausstatten der Behälter und wenigstens einer stromabwärts angeordneten Verpackungsmaschine und/oder Kommissionierungsanlage anpassen. Somit lässt sich der Behälterstrom im Sinne einer gleichmäßigen und kontinuierlichen Produktion an die geforderte Produktionsleistung flexibel durch elektronische Steuerung des Einspeicherns, Pufferns und/oder Ausspeicherns anpassen.

Vorzugsweise werden dann Unterschiede zwischen den für die Shuttles, das Einlaufförderband und/oder das Auslaufförderband ermittelten Sollgeschwindigkeiten, Sollbeschleunigungen und/oder Sollverzögerungen und denjenigen in den vorgelagerten und/oder nachgelagerten Transportstrecken und/oder Verteileinheiten insbesondere durch eine für den jeweiligen Behältertyp spezifische Angleichung reduziert und insbesondere minimiert.

Dadurch lassen sich Leistungsüberkapazitäten einzelner Verfahrensschritte bzw. der dafür verwendeten Vorrichtungsbestandteile sowohl innerhalb der Puffereinrichtung als auch im Zusammenwirken mit vorgelagerten/ nachgelagerten Transportstrecken, Verteileinheiten und/oder Behandlungseinheiten vermeiden. Beispielsweise kann man so nicht benötigte Sicherheitsreserven hinsichtlich mechanischer Anforderungen, elektrischer Versorgungsleistung, Platzbedarf und/oder Medienverbräuchen abbauen, um auf diese Weise sowohl Herstellungskosten als auch Betriebskosten zu minimieren.

Hierbei kann das Verfahren und die Vorrichtung spezifisch zur Verarbeitung bestimmter Füllgüter und/oder Behälterformate angepasst und sukzessive optimiert werden, beispielsweise auf der Grundlage einer Datenbasis, die mittels statistischer Auswertung für einzelne Füllgüter und/oder Behälterformate laufend verfeinert wird.

Vorzugsweise regeln die Shuttles ihre Geschwindigkeit und/oder ihren Abstand zueinander und/oder das Anfahren der ihnen vorgegebenen Sollpositionen dezentral selbst in Abhängigkeit von Betriebszuständen, die von einer Master-Steuerung an die Shuttles übermittelt werden. Die Betriebszustände umfassen wenigstens einen automatischen Initialisierungsbetrieb zum Anfahren eines Streckennullpunkts und/oder zur Vergabe einer Identität / Adresse an die Shuttles, einen Folgebetrieb zum automatischen Nachrücken von Shuttles hinter vorauslaufenden Shuttles und einen Positionierungsbetrieb zum Anfahren von der Master-Steuerung vorgegebener Sollpositionen im Sinne absoluter Streckenpositionen.

Somit können sich die Shuttles auch bei unterschiedlichen Betriebszuständen jeweils an eine bestimmte Betriebssituation und Steuerungsaufgabe anpassen. Zu diesem Zweck umfasst jedes Shuttle eine eigenständige Regelung im Sinne eines Controllers oder dergleichen zum Regeln der vorgegebenen Bewegungsmuster / Fahrprofile der Shuttles.

Beispielsweise können die Shuttles eigenständig überprüfen, an welcher Ist-Streckenposition und/oder in welchem Ist-Abstand zu einem vorausfahrenden Shuttle sie sich befinden und derartige Istwerte an die entsprechenden von der Master-Steuerung vorgegebenen Sollwerte durch eigenständige Regelung anpassen.

Vorzugsweise wechseln die Shuttles an einer der Sollpositionen bei der Erstinbetriebnahme und/oder nach einer vorgegebenen Anzahl von Pufferumläufen, insbesondere nach jedem Pufferumlauf, in den Initialisierungsbetrieb, in dem die Shuttles bezüglich des Streckennullpunkts genullt werden und/oder von der Master-Steuerung eine Identität zugewiesen bekommen. Dadurch können die Shuttles eigenständig ihre Streckenpositionen bezüglich des Nullpunkts bestimmen und beispielsweise mit Streckenpositionen anderer derart identifizierter Shuttles vergleichen, insbesondere zur Abstandsregelung bezüglich vorauslaufender Shuttles.

Somit können die Shuttles unabhängig von ihrer jeweiligen Vorgeschichte für einzelne Pufferumläufe getauft werden und sich somit in eine Abfolge von Shuttles flexibel einreihen. Beispielsweise könnten einzelne Shuttles vor der Initialisierung aus einem Leershuttle-Puffer in die Abfolge für den nächsten Pufferumlauf eingegliedert worden sein, beispielsweise nach einer Instandhaltungsmaßnahme und/oder zum Ausgleich von Pufferkapazitäten je nach Anzahl für den nächsten Pufferumlauf benötigter Shuttles. Beispielsweise könnten abgenutzte oder defekte Shuttles an einer Weiche ausgeschleust werden und/oder eingeschleust werden.

Durch das Initialisieren / Taufen der Shuttles und das Positionsnullen ist der Betrieb beim Einspeichern, Puffern und Ausspeichern im nächsten Pufferumlauf im Wesentlichen unabhängig von der Anzahl und der Herstellungsidentität der Shuttles. Diese lassen sich somit beliebig gegenseitig austauschen und erhalten durch die Initialisierung eine für den nächsten Pufferumlauf geeignete elektronische Identität. Somit sind Einspeichern, Puffern und Ausspeichern unabhängig von der jeweils in der Puffervorrichtung vorhandenen Shuttles möglich. Anders gesagt, kann der Produktionsbetrieb bei einer Entnahme und/oder Ergänzung von Shuttles entweder kontinuierlich weiterlaufen oder erfordert keine Umrüstarbeiten betreffend die nachfolgende Steuerung des Verfahrens und der Vorrichtung.

Vorzugsweise wird im Initialisierungsbetrieb Information bezüglich geleisteter Betriebsdauer und/oder Fahrstrecke einzelner Shuttles und/oder Abnutzungsindikatoren einzelner Shuttles zwischen den Shuttles und der Master-Steuerung ausgetauscht. Die Shuttles werden dann beispielsweise an einer Initialisierungsstation diesbezüglich ausgelesen und die zugehörigen Daten an die Master-Steuerung übermittelt.

Beispielsweise können dann Fahrstrecken und/oder Betriebsstunden einzelner Shuttles aufsummiert werden und eine Vorausfallerkennung auf dieser Grundlage durchgeführt werden, um Produktionsausfälle durch defekte Shuttles möglichst vorausschauend zu vermeiden.

Zusätzlich könnten beispielsweise mittels Vibrationssensoren an den Schienen des Transportsystems Informationen bezüglich des Verschleißzustands einzelner Fahrwerksrollen der Shuttles gewonnen werden, um auf einen Abnutzungszustand des jeweiligen Shuttles zu schließen. Eine derartige Zustandsüberwachung könnte auch an anderen Fördermitteln, beispielsweise Lagern des Einlaufförderbands, Auslaufförderbands oder dergleichen vorgenommen werden. Beispielsweise könnten Getriebe hinsichtlich der Abnutzung daran vorhandener Wälzlager überwacht werden.

Zusätzlich könnte beispielsweise der Antriebsstrom einzelner Shuttles und/oder des Einlaufförderbands und/oder des Auslaufförderbands überwacht und mit dem jeweiligen Ausgangs-/ Auslieferungszustand verglichen werden, um auf gegebenenfalls vorhandene Abnutzung der jeweiligen Antriebe zu schließen.

In diesem Zusammenhang könnte auch die jeweilige Güte der Datenübertragung im Sinne minimaler und maximaler Übertragungsraten überwacht werden, um beispielsweise auf die Abnutzung von elektrischen Schleifspuren und/oder Schleifabnehmern oder dergleichen elektrischer Kontakte zu schließen. Auf dieser Grundlage könnten Wartungszyklen beispielsweise für elektrische Kontakte, mechanische Wälzlager und/oder Laufflächen ermittelt werden. Vorzugsweise gibt die Master-Steuerung im Initialisierungsbetrieb ferner eine Bedienerempfehlung zur Entnahme als abgenutzt oder defekt erkannter Shuttles aus dem Transportsystem aus und/oder löst ein automatisches Ausschleusen solcher Shuttles aus. Dadurch können Produktionsausfälle minimiert werden, wobei der Produktionsbetrieb durch automatisches Positionsnullen und Vergeben elektronischer Identitäten / Adressen an die Shuttles auch bei Ausschleusen / Entnahme einzelner Shuttles ungehindert fortgesetzt werden kann.

Vorzugsweise übermittelt die Master-Steuerung den Slave-Regelungen der Shuttles von Betriebszuständen und/oder Störungszuständen und/oder Behältereigenschaften abhängige Sollpositionen zum Aufnehmen oder Verlassen des Folgebetriebs, insbesondere bei laufender Anpassung der Sollpositionen an Änderungen von Betriebszuständen, Störungszuständen und/oder Behältereigenschaften.

Dadurch können die Shuttles beispielsweise in Abhängigkeit von einem Befüllungsgrad der Pufferfläche gezielt in den Folgebetrieb versetzt werden und diesen beispielsweise bis zum Erreichen des Auslaufbereichs beibehalten. Bis zur Aufnahme des Folgebetriebs können die Shuttles dann vergleichsweise zügig und kontinuierlich über die Pufferfläche bewegt werden. Dies gilt ebenso für das Zurückfahren der entleerten Shuttles in einen als Leershuttle-Puffer ausgebildeten Abschnitt des Transportsystems bzw. für das dortige Nachrücken der Shuttles.

Vorzugsweise übermittelt die Master-Steuerung den Slave-Regelungen der Shuttles von Betriebszuständen und/oder Störungszuständen und/oder Behältereigenschaften abhängige Sollpositionen zum Aufnehmen oder Verlassen des Positionierungsbetriebs und/oder Sollpositionen für im Positionierungsbetrieb anzufahrende Streckenpositionen. Hierbei erfolgt vorzugsweise eine laufende Anpassung der Sollpositionen an Änderungen der Betriebszustände, Störungszustände und/oder Behältereigenschaften.

Dadurch könne einzelne Streckenpositionen beispielsweise in Abhängigkeit von dem jeweiligen Behälterformat und einer gegebenenfalls daran angepassten Abmessung der Reihenschieber in Pufferrichtung gezielt an die jeweiligen Streckenpositionen beim Einspeichern und/oder Ausspeichern herangefahren werden. Ebenso können bestimmte Sollpositionen für als abgenutzt oder defekt erkannte Shuttles vorgegeben werden, um diese beispielsweise gezielt aus dem Transportsystem auszuschleusen. Ebenso könnten bestimmte Streckenpositionen vorgegeben werden, um die Shuttles im Falle eines Nothalts an geeigneten Streckenpositionen zu parken.

Die Vorrichtung dient zum Puffern einreihig gruppierter Behälter in einer Behälterbehandlungsanlage, insbesondere Abfüllanlage. Die Vorrichtung umfasst einen Einlaufbereich mit wenigstens einem Einlaufförderband, einem Auslaufbereich mit wenigstens einem Auslaufförderband, eine sich dazwischen quer in Pufferrichtung erstreckende Pufferfläche und ein über dieser angeordnetes Transportsystem, das an Schienen geführte und unabhängig voneinander angetriebene Shuttles mit quer zur Pufferrichtung ausgerichteten und insbesondere paarweise daran vorhandenen Reihenschiebern zum einreihigen Verschieben der Behälter auf der Pufferfläche vom Einlaufbereich in den Auslaufbereich umfasst.

Erfindungsgemäß umfasst die Vorrichtung ein Steuerungssystem zum Steuern der Shuttles, des Einlaufförderbands und des Auslaufförderbands in Abhängigkeit von spezifisch für das Format und/oder Material der Behälter gespeicherten Sollpositionen, Sollgeschwindigkeiten, Sollbeschleunigungen und/oder Sollverzögerungen. Ergänzend oder alternativ ist das Steuerungssystem zum Steuern der Shuttles in Abhängigkeit von spezifisch für Betriebsarten zum Initialisieren und insbesondere Auslesen der Shuttles, zum Folgen vorauslaufender Shuttles und zum Anfahren von Streckenpositionen spezifisch gespeicherten Sollpositionen, Sollabständen und/oder Sollgeschwindigkeiten ausgebildet.

Damit lassen sich die bezüglich des Anspruchs 1 beschriebenen Vorteile erzielen.

Vorzugsweise umfasst das Steuerungssystem: an den Shuttles angeordnete Slave-Regelungen für die Antriebe der Shuttles; und eine Master-Steuerung zur betriebsartspezifischen Parametrierung der Slave-Regelungen für Betriebszustände umfassend wenigstens einen automatischen Initialisierungsbetrieb zum Anfahren eines Streckennullpunkts und/oder zur Vergabe einer elektronischen Identität / Adresse an die Shuttles, einen Folgebetrieb zum automatischen Nachrücken der Shuttles hinter vorauslaufenden Shuttles und einen Positionierungsbetrieb zum Anfahren von der Zentralvorsteuerung vorgegebener Streckenpositionen.

Damit lassen sich die bezüglich des Anspruchs 6 beschriebenen Vorteile erzielen.

Vorzugsweise umfasst die Vorrichtung ferner eine im Bereich des Transportsystems angeordnete Initialisierungsstation zum Positionsnullen der Shuttles und/oder zum Zuweisen einer von der Master-Steuerung vergebenden elektronischen Identität an die Shuttles und/oder zum Auslesen einer geleisteten Betriebsdauer und/oder Fahrstrecke einzelner Shuttles und/oder zum Auslesen Abnutzungsindikatoren einzelner Shuttles für die Master-Steuerung.

Damit können die Shuttles beispielsweise bei der Erstinstallation, nach einer vorgegebenen Anzahl von Pufferumläufen und insbesondere bei jedem einzelnen Pufferumlauf in eine für den nächsten Pufferumlauf benötigte Abfolge von Shuttles jeweils unabhängig von der Vorgeschichte der einzelnen Shuttles integriert werden oder auch gegebenenfalls in Abhängigkeit von einem Abnutzungsgrad oder Defekt aus der Abfolge von Shuttles und somit aus dem Transportsystem ausgeschleust sowie nach Instandhaltung wieder eingeschleust werden. Ebenso können Abnutzungsindikatoren an die Master-Steuerung übermittelt werden zur Vorausfallerkennung und Vermeidung defektbedingter Produktionsunterbrechungen.

Vorzugsweise umfassen die Reihenschieber quer zur Pufferrichtung verlaufende und sowohl in als auch entgegen der Pufferrichtung begrenzte Führungskanäle zur jeweils einreihigen Aufnahme der Behälter. Dadurch lassen sich die Behälter jeweils einreihig voneinander getrennt auf der Pufferfläche verschieben und sowohl in Pufferrichtung als auch entgegen der Pufferrichtung gegen ein Umfallen innerhalb der Führungskanäle sichern.

Dadurch lassen sich vergleichsweise steile Beschleunigungsrampen und Verzögerungsrampen in Pufferrichtung vorgeben. Beim Einspeichern und Ausspeichern laufen die Behälter dann im Wesentlichen quer zur Pufferrichtung in den Führungskanälen.

Das Steuerungssystem ist insbesondere zum Ausführen der bezüglich des Verfahrens beschriebenen Steuerungsfunktionen / Regelungsfunktionen ausgebildet und umfasst zu diesem Zweck die beschriebene Master-Steuerung und an den Shuttles ausgebildete Slave-Regelungen zur Durchführung / Kontrolle eines eigenständigen Fahrbetriebs der Shuttles auf der Grundlage einer Parametrierung durch die Master-Steuerung.

Beispielsweise kann das Steuerungssystem eine Recheneinheit umfassen zum Ermitteln von Maximalwerten für die Verzögerung und/oder Beschleunigung und/oder Geschwindigkeit des Einlaufförderbands und/oder Auslaufförderbands aus wenigstens einem der folgenden Parameter spezifisch für zu verarbeitende Behältertypen: Höhe, Gewicht, Schwerpunkt, Kippwinkel, Material, Hüllkurve, Bodengeometrie, nominelle Füllhöhe und/oder Material des Behälters, wobei insbesondere Reibwerte des Einlaufförderbands, des Auslaufförderbands, der Pufferfläche, eines dem Einlaufförderband vorgelagerten Förderbands und/oder eines dem Auslaufband nachgelagerten Förderbands in der Recheneinheit oder einem zugeordnetem Datenspeicher abgelegt sind.

Die Master-Steuerung kann dann beispielsweise selbst einen entsprechenden Speicher zum Ablegen derartiger Parameterwerte umfassen und/oder an eine Datenbank zum Abruf derartiger Parameterwerte angeschlossen sein. Ferner kann die Recheneinheit statistische Auswertungen vornehmen betreffend Werte der Parameter, die aus vorhergegangenen Inbetriebnahmen vergleichbarer Vorrichtungen/ Behälterbehandlungsanlagen gewonnen wurden.

Die Master-Steuerung kann beispielsweise zugeordnete Eingabeeinheiten und Ausgabeeinheiten umfassen, beispielsweise ein Mensch-Maschine-Interface, wie beispielsweise einen Touchscreen oder dergleichen, an dem die zugehörigen Parameter gegebenenfalls eingesehen und/oder eingegeben werden können.

Eine bevorzugte Ausführungsform der Erfindung ist zeichnerisch dargestellt. Es zeigen:
- Figur 1: eine schematische Draufsicht auf die Vorrichtung;
- Figur 2: eine seitliche Ansicht der Vorrichtung;
- Figur3: Bewegungsprofile der Shuttles beim Umlauf am Transportsystem;
- Figur 4: eine schematische Darstellung des Steuerungssystems; und
- Figur 5: eine schematische Darstellung der Ermittlung von Bewegungsparametern.

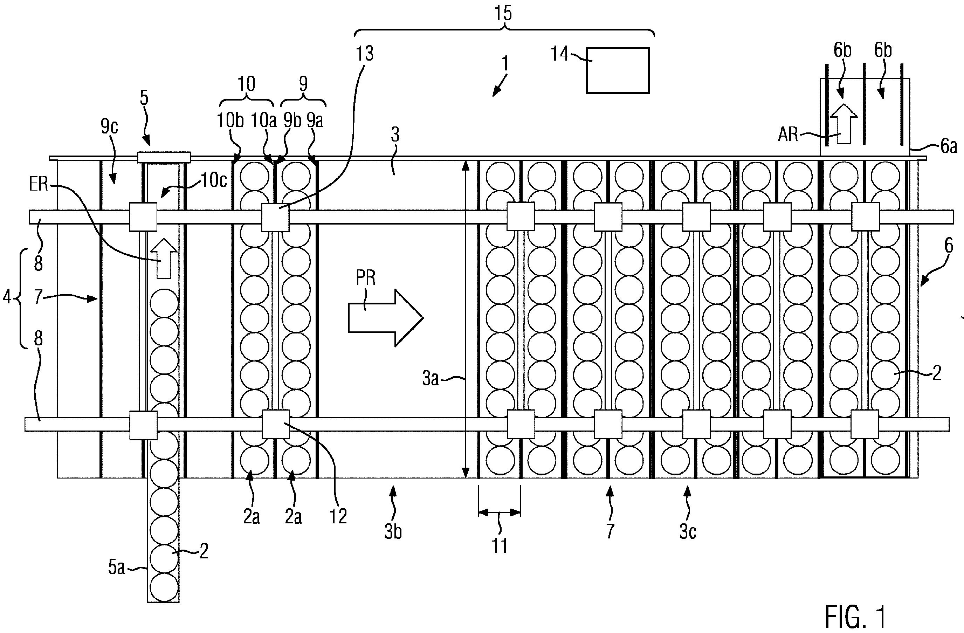

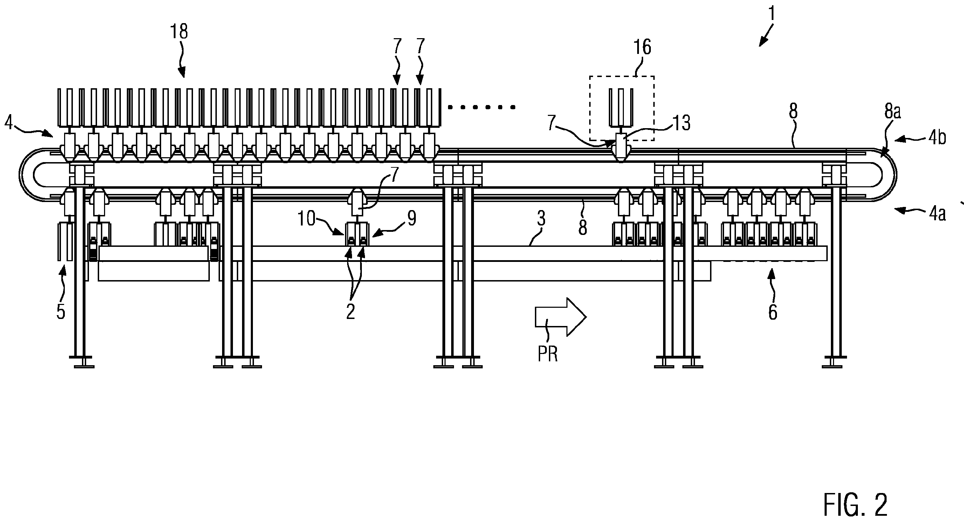

Wie die Figuren 1 und 2 erkennen lassen, umfasst die Vorrichtung 1 zum Puffern einreihig gruppierter Behälter 2 / Behälterreihen 2a eine im Wesentlichen horizontale und feststehende Pufferfläche 3 sowie ein darüber angeordnetes Transportsystem 4 zum Verschieben der Behälter 2 / Behälterreihen 2a auf der Pufferfläche 3 in einer Pufferrichtung PR von einem Einlaufbereich 5 mit wenigstens einem Einlaufförderband 5a in einen Auslaufbereich 6 mit wenigstens einem Auslaufförderband 6a. Bei den Behältern 2 handelt es sich beispielsweise um Flaschen.

Das wenigstens eine Einlaufförderband 5a verläuft in einer Einlaufrichtung ER und das Auslaufförderband 6a in einer Auslaufrichtung AR jeweils quer und insbesondere orthogonal zur Pufferrichtung PR des Transportsystems 4.

Das Transportsystem 4 umfasst unabhängig voneinander angetriebene Shuttles 7 und als geschlossene Umlaufbahn ausgebildete Schienen 8, an denen die Shuttles 7 entlanglaufen. Die Shuttles 7 umfassen vorzugsweise wenigstens einen (in Pufferrichtung PR gesehen) vorderen Reihenschieber 9 und einen diesbezüglichen hinteren Reihenschieber 10. Die Shuttles 7 könnten aber auch jeweils nur einen der Reihenschieber 9, 10 umfassen.

Die in Pufferrichtung hintereinander am Shuttle 7 angeordneten Reihenschieber 9, 10 können auch als Zwillings-Reihenschieber angesehen werden. Jeder Reihenschieber 9, 10 ist zur einreihigen Aufnahme der Behälter 2, also jeweils einer räumlich in Pufferrichtung PR abgetrennten Behälterreihe 2a, ausgebildet und quer, insbesondere orthogonal, zur Pufferrichtung PR ausgerichtet. Die Reihenschieber 9, 10 können somit auch als in Pufferrichtung PR bewegliche und räumlich voneinander getrennte Pufferzeilen für die einzelnen Behälterreihen 2a angesehen werden.

Die Reihenschieber 9, 10 sind zur jeweils vorauslaufenden und nachlaufenden Führung der einreihig gruppierten Behälter 2 und somit zu deren Führung sowohl in Pufferrichtung PR, also bei deren Vorschub in Pufferrichtung PR, beispielsweise bei Beschleunigung des Vorschubs, als auch entgegen der Pufferrichtung PR, insbesondere beim Abbremsen des Vorschubs, ausgebildet.

Die Reihenschieber 9, 10 umfassen zu diesem Zweck jeweils eine den Behältern 2 vorauslaufende vordere Reihenführung 9a, 10a und eine den Behältern 2 nachlaufende hintere Reihenführung 9b, 10b sowie von diesen jeweils begrenzte Führungskanäle 9c, 10c zur Aufnahme und zweiseitigen Führung der Behälter 2 / einzelnen Behälterreihen 2a. Die hintere Reihenführung 9b und die vordere Reihenführung 10a können fest zueinander am Shuttle 7 angeordnet sein oder auch einstückig ausgebildet sein.

Die Reihenschieber 9, 10 bzw. deren Führungskanäle 9c, 10c weisen eine jeweils zwischen vorderer Reihenführung 9a, 10a und hinterer Reihenführung 9b, 10b definierte lichte Weite 11 auf, die vorzugsweise an die jeweilige Behälterbreite/ den jeweiligen Behälterdurchmesser angepasst werden kann (nicht dargestellt).

Die Shuttles 7 umfassen jeweils einen Antrieb 12 zur individuellen Fortbewegung entlang der Schienen 8 und eine individuelle Slave-Regelung 13 (lediglich der Übersichtlichkeit halber in der Figur 1 in getrennten Bereichen eines Shuttles 7 dargestellt), die von einer an der Vorrichtung 1 vorhandenen Master-Steuerung 14 parametriert wird und auf dieser Grundlage zur selbstständigen Regelung des zugehörigen Antriebs 12 ausgebildet ist.

Die Master-Steuerung 14 und die Slave-Regelung 13 sind Bestandteile eines Steuerungssystems 15, das beispielsweise weitere Einheiten (nicht dargestellt) zur Steuerung des Einlaufförderbands 5a und des Auflaufförderbands 6a umfassen kann.

Das Steuerungssystem 15 umfasst vorzugsweise ferner eine Initialisierungsstation 16, die im Bereich des Transportmittels 4 angeordnet ist. Wie die Figur 2 diesbezüglich erkennen lässt, umfasst das Transportmittel 4 eine untere Transportebene 4a, in der die Reihenschieber 9, 10 mit den Behältern 2 über die Pufferfläche 3 in Pufferrichtung PR bewegt werden, und eine obere Transportebene 4b, in der die entleerten Shuttles 7 entgegen der Pufferrichtung PR und vorzugsweise kopfüber wieder vom Auslaufbereich 6 zum Einlaufbereich 5 zurücklaufen.

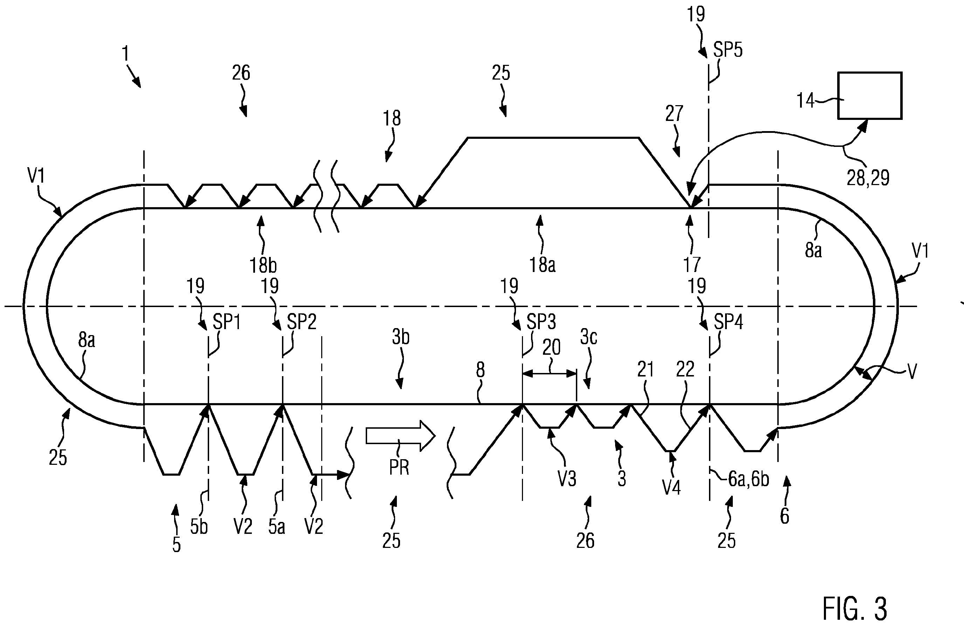

Die Initialisierungsstation 16 befindet sich vorzugsweise in der oberen Transportebene 4b und im Bereich eines Streckennullpunkts 17, an dem die einzelnen Shuttles 7 bei der Erstinbetriebnahme, nach einer vorgegebenen Anzahl von Pufferumläufen und/oder bei jedem Pufferumlauf bezüglich des Streckennullpunkts 17 im Sinne eines Bezugspunkts für die anschließende Streckenfahrt genullt werden. Dies dient einer Zuordnung einzelner Streckenpositionen entlang der Schienen 8, um an den Streckenpositionen bestimmte Bewegungsabläufe der Shuttles 7 zu initiieren, wie dies beispielhaft in der Figur 3 noch detailliert beschrieben wird.

In der oberen Transportebene 4b ebenso schematisch angedeutet ist ein Leershuttle-Puffer 18, in dem die zuvor entleerten Shuttles 7 auf einen erneuten Pufferumlauf warten und zu diesem Zweck beispielsweise in einem Folgebetrieb, der nachfolgend noch beschrieben wird, hintereinander automatisch nachrücken.

Die Reihenschieber 9, 10 erstrecken sich vorzugsweise im Wesentlichen über die gesamte Breite 3a der Pufferfläche 3 und weisen vorzugsweise eine Breite (quer zur Pufferrichtung PR) von 3 bis 6 m auf, insbesondere von 4 bis 5,5 m.

Die Antriebe 12 der Shuttles 7 sind jeweils unabhängig voneinander und können beispielsweise ein Linearmotorantrieb sein oder ein Servomotor (nicht im Detail dargestellt), so dass die einzelnen Shuttles 7 unabhängig voneinander mit unterschiedlichen Geschwindigkeiten entlang der Schienen 8 angetrieben werden können.

Somit können die einzelnen Shuttles 7 an prinzipiell beliebige Streckenpositionen der von den Schienen 8 definierten Umlaufbahn bewegt und dort beispielsweise positioniert werden. Hierfür können die Shuttles 7 unabhängig voneinander beschleunigt und abgebremst werden. Ebenso können an bestimmten Streckenpositionen bestimmte Betriebsarten der Shuttles 7 initiiert werden, beispielsweise ein Initialisierungsbetrieb zum Initialisieren und/oder Auslesen der Shuttles 7, ein Folgebetrieb um automatischen Nachrücken eines bestimmten Shuttles 7 hinter vorauslaufenden Shuttles 7 und ein Positionierungsbetrieb zum Anfahren von der Master-Steuerung 14 vorgegebener Sollpositionen 19 mit dem Shuttle 7, wie nachfolgend noch bezüglich der Figur 3 beschrieben ist.

Mit dem Steuerungssystem 15 können Abstände zwischen einzelnen Shuttles 7 verändert werden, beispielsweise zum Überfahren leerer Bereiche der Pufferfläche 3. Stattdessen kann aber auch eine Abfolge mehrerer Shuttles 7 mit konstantem Sollabstand 20 zueinander bewegt werden, beispielsweise beim Nachrücken der Shuttles 7 in einem gefüllten Bereich der Pufferfläche 3 zum Auslaufbereich 6 hin. Auch dies ist in der Figur 3 schematisch angedeutet.

Die Shuttles 7 können als Läufer von Linearmotoren ausgebildet sein, deren aktive Komponenten dann vorzugsweise an den Schienen 8 angeordnet sind. Entsprechend wären die Shuttles 7 dann mit zugehörigen Permanentmagneten ausgestattet. Diese bilden mit Langstatoren bekanntermaßen individuelle Antriebe für die einzelnen Shuttles 7 aus.

Stattdessen wären aber auch andere Antriebe 12 an den Shuttles 7 denkbar, beispielsweise Servomotoren mit Antriebsritzeln, die an einer entlang der Schienen 8 ausgebildeten Verzahnung entlanglaufen können (jeweils nicht dargestellt). Die Fahrwerke der Shuttles 7 können auf bekannte Weise mit den Schienen 8 zusammenwirkende Führungs- und Laufrollen umfassen (nicht dargestellt).

Die Antriebsenergie könnte sowohl berührungslos, also ohne Schleifleitungen, an die Servomotoren oder dergleichen Antriebe 12 der Shuttles übertragen werden, als auch durch Schleifkontakte oder dergleichen.

Die Shuttles 7 können zudem Energiespeicher für ihre individuelle Antriebe 12 aufweisen, wie beispielsweise Leistungskondensatoren, Batterien oder dergleichen. Dadurch lassen sich Spitzen der Leistungsaufnahme beispielsweise beim Beschleunigen der Shuttles 7 kompensieren oder eine Energieversorgung in Abschnitten der Schienen 8 aufrechterhalten, in denen keine permanente Energieeinspeisung aus einer stationären Energiequelle möglich ist.

Die Datenübertragung im Steuerungssystem 15 kann bezüglich der Shuttles 7 beispielsweise mittels Leck-Wellenleiter und/oder funkgestützt erfolgen, beispielsweise über WLAN.

Die Figur 3 verdeutlicht schematisch Bewegungsprofile der (in der Figur 2 der Übersichtlichkeit halber nicht dargestellten) Shuttles 7 beim Umlauf an den Schienen 8. Die Vorschubgeschwindigkeit V der Shuttles 7 ist hierfür schematisch als orthogonaler Kurvenabstand von der jeweiligen Bewegungsrichtung der Shuttles 7 entlang der Schienen 8 dargestellt.

Demnach rücken wartende leere Shuttles 7 beispielsweise mit einer ersten Sollgeschwindigkeit V1 zum Einlaufbereich 5 nach, werden dort bis auf eine zweite Sollgeschwindigkeit V2 beschleunigt und so abgebremst, dass sie zunächst über einem (in Pufferrichtung PR gesehen) hinteren Einlaufförderband 5b stillstehen. Dort werden die jeweils vorderen Reihenschieber 9 mit den Behältern 2 einreihig bestückt.

Zum nachfolgenden Anfahren eines (in Pufferrichtung PR gesehen) vorderen Einlaufförderbands 5a werden die Shuttles 7 wiederum auf die zweite Sollgeschwindigkeit V2 beschleunigt und dann wieder bis zum Stillstand abgebremst. Vom vorderen Einlaufförderband 5a werden vorzugsweise die hinteren Reihenschieber 10 mit den Behältern 2 einreihig bestückt.

Die zweite Sollgeschwindigkeit V2 ist vorzugsweise größer als die erste Sollgeschwindigkeit V1, wodurch das Einspeichern beschleunigt und gegebenenfalls an die Fördergeschwindigkeit des zulaufenden Behälterstroms angepasst werden kann.

Beispielhaft dargestellt ist ferner, dass die Shuttles 7 im Bereich des hinteren Einlaufförderbands 5b an eine erste Streckenposition SP1 und dort angehalten werden, im Bereich des vorderen Einlaufförderbands 5a an einer zweiten Streckenposition SP2.

Den Streckenpositionen SP1, SP2 wird von der Master-Steuerung 14 jeweils eine Sollposition 19 zugeordnet. Die Sollposition 19 kann beispielsweise in Abhängigkeit vom Behälterdurchmesser angepasst werden. Beispielsweise könnte die Sollposition 19 bei einer Verkleinerung des zu puffernden Behälterdurchmessers in Pufferrichtung PR verschoben werden, damit die Vorschubposition des zu bestückenden Führungskanals 9c, 10c mit dem Einlaufförderband 5a, 5b fluchtet. Ebenso wäre es denkbar, die Behälter nur mit einem der Einlaufförderbänder 5a, 5b einzuspeichern, so dass die erste oder zweite Streckenposition SP1, SP2 nicht angefahren wird und dieser somit keine Sollposition 19 zugewiesen wird.

Derartige Anpassungen einzelner Sollpositionen 19 für bestimmte Streckenpositionen SP1, SP2 können prinzipiell vom Steuerungssystem 15 beliebig an Behältereigenschaften und/oder Betriebsweisen der Vorrichtung 1 angepasst werden.

In der Figur 3 ferner schematisch dargestellt sind Sollabstände 20 zwischen aufeinanderfolgende Shuttles 7 beim Nachrücken auf der Pufferfläche 3 zum Auslaufbereich 6 hin und/oder beim Nachrücken entleerter Shuttles 7 im Bereich des Leershuttle-Puffers 18.

Ebenso lediglich beispielhaft dargestellt sind Sollbeschleunigungen 21 und Sollverzögerungen 22 im Sinne von Beschleunigungsrampen und Verzögerungsrampen zwischen einzelnen Sollgeschwindigkeiten V1 bis V4 und/oder Stillstand V0.

Entlang der Umlaufbahn könnten auch unterschiedliche Sollbeschleunigungen 21 und/oder Sollverzögerungen 22 von der Master-Steuerung 14 vorgegeben werden. In der Regel richten sich Sollbeschleunigungen 21 und/oder Sollverzögerungen 22 nach Behältereigenschaften, wie beispielsweise Höhe, Gewicht, Schwerpunkt, Kippwinkel, Material, Hüllkurvenkontur, Bodengeometrie, nominelle Füllhöhe und/oder Material des jeweiligen Behältertyps der Behälters 2 und/oder nach dem Reibwert des Einlaufförderbands 5a, 5b, des Auslaufförderbands 6a, der Pufferfläche 3 und/oder dem Einlaufförderband 5a, 5b vorgelagerten/ dem Auslaufförderband 6a nachgelagerten Förderbändern.

Somit kann es beispielsweise je nach Behältertyp und Beschaffenheit der einzelnen Fördermittel zweckdienlich sein, eine einheitliche Sollbeschleunigung 21 und/oder Sollverzögerung 22 für mehrere Förderbänder vorzugeben oder aber speziell an die jeweiligen Kombinationen aus Behälter 2 und Förderband angepasste Sollbeschleunigungen 21 und/oder Sollverzögerungen 22.

Insbesondere können Sollbeschleunigungen 21 und/oder Sollverzögerungen 22 in Abhängigkeit von den Eigenschaften eines bestimmten Behältertyps flexibel softwaregesteuert von der Master-Steuerung 14 vorgegeben und im Sinne einer Parametrierung der jeweiligen Bewegungsabläufe den Slave-Regelung 13 der Shuttles 7 vorgegeben werden. Die Regelung der einzelnen Bewegungsabläufe erfolgt dann im Rahmen der vorgegebenen Parametrierung in den Slave-Regelungen 13 der Shuttles 7.

Die zweiseitig, nämlich vorauslaufend und nachlaufend führenden Reihenschieber 9, 10 bewirken, dass von diesen aufgenommene Behälter 2 / Behälterreihen 2a sowohl beim Beschleunigen als auch beim Abbremsen der Shuttles 7 präzise und weitgehend gegen Umfallen gesichert in Pufferrichtung PR mitgenommen und positioniert werden können.

Dennoch kann es sinnvoll sein, die Sollbeschleunigung 21 und/oder Sollverzögerung 22 der Shuttles 7 zu begrenzen, bzw. behältertypspezifisch vorzugeben, um die Behälter 2 beim Beschleunigen/ Abbremsen mechanisch nicht zu überlasten.

Das Einlaufförderband 5a, 5b wird vorzugsweise mit einer Sollgeschwindigkeit VE betrieben, das Auslaufförderband mit einer Sollgeschwindigkeit VA. Sofern ein intermittierender Betrieb des Einlaufförderbands 5a, 5b und/oder des Auslaufförderbands 6a beim Einspeichern/ Ausspeichern erforderlich ist, wird hierfür vorzugsweise eine Sollbeschleunigung 23 und/oder Sollverzögerung 24 von der Master-Steuerung 14 vorgegeben. Auch dies kann softwaregesteuert flexibel an den jeweiligen Behältertyp und/oder dessen Materialpaarung mit dem Einlaufförderband 5a, 5b und/oder Auslaufförderband 6a angepasst werden.

Gemäß Figur 3 werden die Shuttles 7 beim anschließenden Überfahren eines leeren Pufferbereichs 3b der Pufferfläche 3 vorzugsweise wieder auf die zweite Sollgeschwindigkeit V2 beschleunigt und mit dieser bis an einen mit den Shuttles 7 besetzten Pufferbereich 3c der Pufferfläche 3 herangefahren und zum Anschluss an dort bereits positionierte, bestückte Shuttles 7 abgebremst.

Dem Anfang des besetzten Pufferbereichs 3c der Pufferfläche 3 kann zu diesem Zweck eine Sollposition 19 von der Master-Steuerung 14 zugewiesen werden, beispielsweise indem die Befüllung der Pufferfläche 3 sensorisch überwacht wird und die Master-Steuerung 14 Informationen darüber erhält, wo der besetzte Pufferbereich 3c beim Eintreffen des Shuttles 7 beginnt.

Demnach durchfährt das Shuttle 7 den leeren Pufferbereich 3b bis zum Beginn des besetzten Pufferbereichs 3c, also bis zur festgestellten Sollposition 19, in einem Positionierungsbetrieb 25 bis zu einer Streckenposition SP3 am Übergang des leeren Pufferbereichs 3b zum besetzten Pufferbereichs 3c. Die Sollposition 19 entspricht dann im Wesentlichen der dritten Streckenposition SP3. An der Sollposition 19 wechselt das Shuttle 7 dann vom Positionierungsbetrieb 25 auf einen automatischen Folgebetrieb 26, in dem das Shuttle unter Einhaltung des Sollabstands 20 dem jeweils vorauslaufenden Shuttle 7 folgt.

Der Folgebetrieb 26 wird dann beispielsweise so lange aufrechterhalten, bis das jeweilige Shuttle 7 den Auslaufbereich 6 erreicht, dessen Anfang beispielsweise eine weitere Sollposition 19 zugeordnet ist. An dieser würde das Shuttle 7 dann wieder in einen Positionierungsbetrieb 25 wechseln, um in diesem eine vierte Streckenposition SP4 anfahren, in der das Shuttle 7 angehalten wird, um die Behälter 2 aus den zugeordneten Reihenschiebern 9, 10 auszuspeichern.

Der Sollabstand 20 kann beispielsweise von der lichten Weite 11 der Führungskanäle 9c, 10c abhängen und wird entsprechend von der Master-Steuerung 14 im Sinne einer Parametrierung den Slave-Regelungen 13 der Shuttles 7 vorgegeben. Im besetzten Pufferbereich 3 rücken die Shuttles 7 dann vorzugsweise unter Einhaltung des Sollabstands 20 mit einer dritten Sollgeschwindigkeit V3 zum Auslaufbereich 6 hin insbesondere schrittweise nach.

Die dritte Sollgeschwindigkeit V3 im besetzten Pufferbereich 3c kann kleiner sein als die erste Sollgeschwindigkeit V1 im Einlaufbereich und die zweite Sollgeschwindigkeit V2 im leeren Pufferbereich 3b.

Zum Ausspeichern werden die Shuttles 7 beispielsweise auf eine vierte Sollgeschwindigkeit V4 beschleunigt und dann bis zum Stillstand V0 über dem zugeordneten Auslaufförderband 6a abgebremst. Das Auslaufförderband 6a kann dabei stillstehen und dann zum Ausspeichern gezielt beschleunigt werden oder aber auch kontinuierlich laufen.

Je nach Antrieb des Auslaufförderbands 6a können die Reihenschieber 9, 10 mit jeweils zugeordneten Transportgassen 6b fluchtend positioniert werden. Beispielsweise können die Behälter 2 / Behälterreihen 2a aus den Führungskanälen 9c, 10c der Reihenschieber 9, 10 durch Start-Stopp-Steuerung des wenigstens einen Auslaufförderbands 6a gezielt quer zur Pufferrichtung PR auslaufen und zu einzelnen der nebeneinander angeordneten Transportgassen 6b zugeordnet werden. Jeder Transportgasse 6b wäre dann vorzugsweise ein separat steuerbares/ angetriebenes Auslaufförderband 6a zugeordnet.

Es ist jedoch auch denkbar, die Behälter 2 aus den Führungskanälen 9c, 10c mittels eines kontinuierlich laufenden Auslaufförderbands 6a, mittels eines zusätzlichen, daneben verlaufenden Beschleunigungsbands und/oder Zuhilfenahme von Führungsschienen zum Zusammenführen der aus den Führungskanälen 9c, 10c auslaufenden Behälterreihen 6a auszuspeichern.

Die vierte Sollgeschwindigkeit V4 im Auslaufbereich 6 kann beispielsweise größer als die dritte Sollgeschwindigkeit V3 und kleiner als die zweite Sollgeschwindigkeit V2 sein.

Die entleerten Shuttles 7 können beispielsweise mit der vierten Geschwindigkeit V4 bis an das Ende des Auslaufbereichs 6 gefahren werden und dort auf die erste Geschwindigkeit V1 abgebremst werden, um die Shuttles schließlich entlang eines beispielsweise als Klothoid 8a ausgebildeten Kurvensegments der Schienen 8 in die obere Transportebene 4b zu fahren. Die Shuttles 7 könnten dann im Positionierungsbetrieb bis an eine fünfte Streckenposition SP5 im Sinne einer weiteren Sollposition 19 gefahren werden, an der die Shuttles 7 vom Positionierungsbetrieb 25 in einen Initialisierungsbetrieb 27 wechseln.

Im Initialisierungsbetrieb 27 werden die Shuttles 7 beispielsweise bezüglich des Streckennullpunkts 17 genullt und/oder erhalten von der Master-Steuerung 14 eine elektronische Identität 28 zugewiesen. Ebenso kann im Initialisierungsbetrieb 27 Information 29 bezüglich geleisteter Betriebsdauer/ Fahrstrecke einzelner Shuttles 7 und/oder Abnutzungsindikatoren einzelner Shuttles 7 zwischen der Slave-Regelung 13 der Shuttles 7 und der Master-Steuerung 14 ausgetauscht werden.

Die Master-Steuerung 14 kann auf dieser Grundlage beispielsweise eine Bedienerempfehlung zur Entnahme eines als abgenutzt oder defekt erkannten Shuttles 7 ausgeben und/oder eine automatische Entnahme eines solchen Shuttles 7 auslösen.

Zu diesem Zweck kann beispielsweise in der oberen Transportebene 4b eine Weiche vorhanden sein, um abgenutzte/ defekte Shuttles 7 auszuschleusen und/oder funktionstüchtige Shuttles 7 einzuschleusen.

Sollpositionen 19 zum Aufnehmen/ Verlassen des Positionierungsbetriebs 25, des Folgebetriebs 26 und des Initialisierungsbetriebs 27 werden von der Master-Steuerung 14 an die Slave-Regelungen 13 der Shuttles 7 mit zugehörigen Steuerbefehlen übermittelt, so dass die Slave-Regelungen 13 jeweils selbstständig ein zugehöriges Bewegungsmuster ausführen und zugehöriger Datenaustausch zwischen der Master-Steuerung 14 und den Slave-Regelungen 13 erfolgen kann.

Den Leershuttle-Puffer 18 durchlaufen die Shuttles 7 der Pufferrichtung PR entgegengesetzt und vorzugsweise kopfüber bezüglich ihrer Ausrichtung auf der Pufferfläche 3 vorzugsweise im Folgebetrieb 26.

Der Leershuttle-Puffer 18 umfasst in der Regel einen aufnahmefähigen, also nicht mit leeren Shuttles 7 vollständig besetzten Pufferbereich 18a und einen mit leeren Shuttles 7 besetzten Pufferbereich 18b. Der unbesetzte Pufferbereich 18a kann beispielsweise im Positionierungsbetrieb 25 mit der zweiten Sollgeschwindigkeit V2 durchfahren werden. Zum Nachrücken im besetzten Pufferbereich 18b können die leeren Shuttles 7 wiederum schrittweise auf die dritte Sollgeschwindigkeit V3 beschleunigt und bis zum Stillstand V0 abgebremst werden.

Die voraus- und nachlaufend führenden Reihenschieber 9, 10 ermöglichen vergleichsweise hohe Sollgeschwindigkeiten V1 bis V4 der bestückten Shuttles 7 bei exakter Positionierung der Behälter 2 / Behälterreihen 2a in und entgegen der Pufferrichtung PR in den Führungskanälen 9c, 10c unter Vermeidung eines Umfallens einzelner Behälter 2 der Behälterreihen 2a sowohl bei einer zugeordneten Sollbeschleunigung 21 als auch einer zugeordneten Sollverzögerung 22 der Shuttles 7.

Zudem begünstigen die Führungskanäle 9c, 10c ein präzises Ein- und Ausspeichern quer zur Pufferrichtung PR, beispielsweise auf dem wenigstens einen Auslaufförderband 6a bei der Verteilung der Behälter 2 / Behälterreihen 2a auf unterschiedliche Transportgassen 6b oder dergleichen Manipulation der Behälter 2.

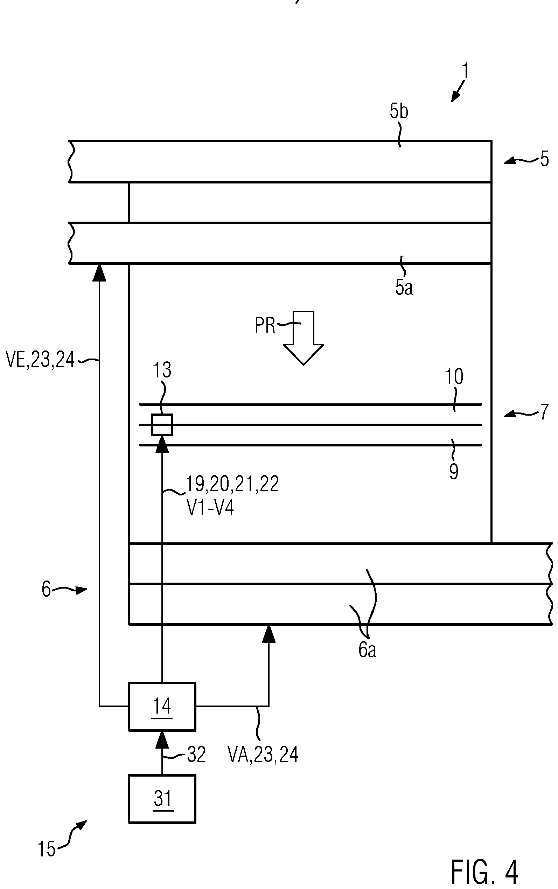

Die Figur 4 verdeutlicht schematisch das Steuerungssystem 15 der Vorrichtung 1 mit der Master-Steuerung 13 und Slave-Regelungen 13 (nur eine davon exemplarisch angedeutet).

Demnach werden die Einlaufförderbänder 5a, 5b jeweils mit der Sollgeschwindigkeit VE und das Auslaufförderband 6a mit der Sollgeschwindigkeit VA angetrieben. Die Sollgeschwindigkeiten V1 bis V4 der Shuttles 7 werden von den Slave-Regelungen 13 in Abhängigkeit von Sollpositionen 19, Sollabständen 20 und Sollgeschwindigkeiten V1 bis V4 eingestellt und geregelt.

Angedeutet ist ferner eine Datenbank 31, in der beispielsweise Messwerte, Materialeigenschaften oder dergleichen Parameter zur Ermittlung der Sollpositionen 19, Sollabstände 20, Sollbeschleunigungen 21, 23, Sollverzögerungen 22, 24 und Sollgeschwindigkeiten V1 bis V4, VE, VA abgelegt sind. Insbesondere enthält die Datenbank 31 Information mit jeweils für einen bestimmten Behältertyp und/oder die jeweiligen Förderflächen des Einlaufförderbands 5a, Auslaufförderbands 6a und der Pufferfläche 3 zulässigen Maximalwert 32 für Verzögerung, Beschleunigung und/oder Geschwindigkeit der Behälter 2.

Derartige Maximalwerte 32 können beispielsweise aus Messungen an den Behältern 2 des jeweiligen Behältertyps in der Behälterbehandlungsanlage bzw. Vorrichtung 1 ermittelt und in der Datenbank 31 abgelegt werden. Ebenso kann die Datenbank 31 von der Vorrichtung 1 direkt nicht abhängende Behältereigenschaften umfassen und/oder Daten auf der Grundlage statistischer Auswertungen von Behandlungsergebnissen mit dem Behältertyp in zuvor in Betrieb genommenen Behälterbehandlungsanlagen, also außerhalb der jeweiligen Vorrichtung 1 bzw. Behälterbehandlungsanlage gewonnene Daten.

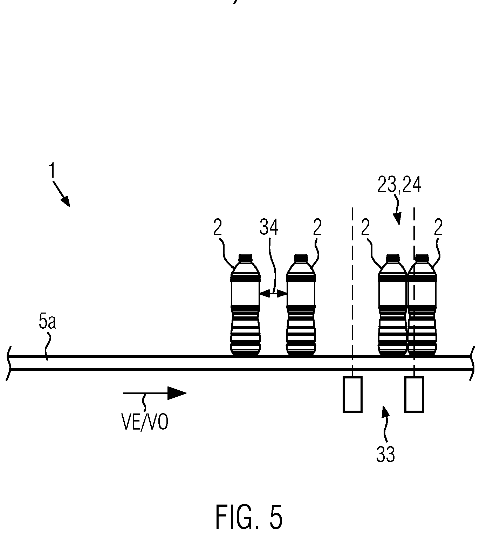

Die Figur 5 zeigt schematisch, wie beispielsweise Maximalwerte der zur Berechnung der Sollwerte verwendeten Parameter gewonnen werden können. Demnach erfolgt beispielsweise auf dem Einlaufförderband 5a eine Lückenerfassung 33 zwischen einlaufenden Behältern 2 und eine Auswertung dahingehend, ob die Behälter 2 relativ zueinander beim Abbremsen des Einlaufförderbands 5a verrutschen. Das heißt, es wird überprüft, ob vorhandene Lücken 34 zwischen den Behältern 2 sich verkleinem oder vergrößern. Dies kann mit unterschiedlichen Geschwindigkeiten des Einlaufförderbands 5a mit gegebenenfalls unterschiedlich steilen Abbremsrampen oder dergleichen zwischen einer Einlaufgeschwindigkeit VE und Stillstand V0 erfolgen. Daraus lässt sich beispielsweise ermitteln, ab welcher Geschwindigkeit und/oder Beschleunigung 23 oder Verzögerung 24 des Einlaufförderbands 5a ein Behälter 2 eines bestimmten Behältertyps anfängt, bezüglich wenigstens eines benachbarten Behälters 2 zu verrutschen.

Derartige Überwachungen können sowohl im Vorfeld, beispielsweise vor Erstinbetriebnahme der Vorrichtung 1, erfolgen als auch im laufenden Betrieb. Beispielsweise kann sich herausstellen, dass aufgrund einer Verschmutzung des Einlaufförderbands 5a eine erhöhte Neigung der Behälter 2 zum Verrutschen besteht und somit eine veränderte Maximalgeschwindigkeit und/oder Maximalverzögerung des Einlaufförderbands 5a unter den aktuellen Betriebszuständen festgestellt wird.

Entsprechend würde dann eine Sollgeschwindigkeit VE des Einlaufförderbands 5a für einen zuverlässigen und störungsfreien Arbeitsbetrieb nach unten korrigiert. Gegebenenfalls könnte auf dieser Grundlage auch auf eine gegebenenfalls nötige Reinigung des Einlaufförderbands 5a geschlossen werden oder dergleichen Instandhaltungsmaßnahmen eingeleitet werden.

Das Steuerungssystem 15 ermöglicht eine flexible Prozessoptimierung für unterschiedliche Behältertypen hinsichtlich der einzelnen Bewegungsabläufe der Behälter 2 auf dem Einlaufförderband 5a, dem Auslaufförderband 6a und beim Verschieben in Pufferrichtung PR in den Reihenschiebern 9, 10.

## Patentansprüche

1. Verfahren zum Puffern einreihig gruppierter Behälter (2) in einer Behälterbehandlungsanlage, insbesondere Abfüllanlage, wobei die Behälter auf wenigstens einem Einlaufförderband (5a, 5b) in Einlaufrichtung (ER) eingespeichert werden, auf einer sich quer daran anschließenden Pufferfläche (3) von schienengeführten und einzeln angetriebenen Shuttles (7) mit Reihenschiebern (9, 10) in einer zur Einlaufrichtung quer verlaufenden Pufferrichtung (PR) einreihig verschoben werden und auf wenigstens einem in Pufferrichtung quer daran anschließenden Auslaufförderband (6a) ausgespeichert werden, **dadurch gekennzeichnet, dass** die Shuttles, das Einlaufförderband und das Auslaufförderband in Abhängigkeit von spezifisch für das Format und/oder Material der Behälter gespeicherten Sollpositionen (19), Sollgeschwindigkeiten (V1-V4) und/oder Sollbeschleunigungen/-verzögerungen (21, 22, 23, 24) gesteuert werden, und/oder die Shuttles in Abhängigkeit von spezifisch für Betriebsarten (25, 26, 27) zum Initialisieren und insbesondere Auslesen der Shuttles, zum Folgen vorauslaufender Shuttles und zum Anfahren von Streckenpositionen (SP1-SP5) gespeicherten Sollpositionen (19), Sollabständen (20) und/oder Sollgeschwindigkeiten (V1-V4) gesteuert werden.

2. Verfahren nach Anspruch 1, wobei Maximalwerte (32) für die Verzögerung und/oder Beschleunigung und/oder Geschwindigkeit des Einlaufförderbands (5a) und/oder Auslaufförderbands (6a) und/oder der Shuttles (7) aus wenigstens einem der folgenden Parameter spezifisch für zu verarbeitende Behältertypen berechnet und typspezifisch abrufbar gespeichert werden: Höhe, Gewicht, Schwerpunkt, Kippwinkel, Material, Hüllkurve, Bodengeometrie, nominelle Füllhöhe und/oder Material des Behältertyps, insbesondere unter Berücksichtigung wenigstens eines Reibwerts des Einlaufförderbands, des Auslaufförderbands, der Pufferfläche, eines dem Einlaufförderband vorgelagerten Förderbands und/oder eines dem Auslaufband nachgelagerten Förderbands.

3. Verfahren nach Anspruch 2, wobei die Werte der für die Berechnung der Maximalwerte (32) verwendeten Parameter aus Messungen an den Behältern des jeweiligen Behältertyps in der Behälterbehandlungsanlage ermittelt, aus einer Datenbank (31) mit Behältereigenschaften abgerufen und/oder auf der Grundlage statistischer Auswertungen von Behandlungsergebnissen mit dem Behältertyp in zuvor in Betrieb genommenen Behälterbehandlungsanlagen ermittelt werden.

4. Verfahren nach Anspruch 2 oder 3, wobei die Sollpositionen (19), Sollgeschwindigkeiten (V1-V4), Sollbeschleunigungen (21, 23) und/oder Sollverzögerungen (22, 24) der Shuttles (7), des Einlaufförderbands (5a) und des Auslaufförderbands (6a) auf der Grundlage der berechneten Maximalwerte (32) ermittelt und insbesondere mit Sollpositionen, Sollgeschwindigkeiten, Sollbeschleunigungen und/oder Sollverzögerungen der Behälter in vorgelagerten und/oder nachgelagerten Transportstrecken und/oder Verteileinheiten für die Behälter (2) abgeglichen werden.

5. Verfahren nach Anspruch 4, wobei Unterschiede zwischen den für die Shuttles (7), das Einlaufförderband (5a) und/oder das Auslaufförderband (6a) ermittelten Sollgeschwindigkeiten (V1-V4), Sollbeschleunigungen (21, 23) und/oder Sollverzögerungen (22, 24) und denjenigen in den vorgelagerten und/oder nachgelagerten Transportstrecken und/oder Verteileinheiten insbesondere durch für den jeweiligen Behältertyp spezifische Angleichung reduziert und insbesondere minimiert werden.

6. Verfahren nach wenigstens einem der vorigen Ansprüche, wobei die Shuttles (7) ihre Geschwindigkeit und/oder ihren Abstand zueinander und/oder das Anfahren der ihnen vorgegebenen Sollpositionen (19) dezentral selbst regeln in Abhängigkeit von einem von einer Master-Steuerung (14) an die Shuttles übermittelten Betriebszustand umfassend wenigstens einen automatischen Initialisierungsbetrieb (27) zum Anfahren eines Streckennullpunkts (17) und/oder zur Vergabe einer elektronischen Identität (28) / Adresse an die Shuttles, einen Folgebetrieb (26) zum automatischen Nachrücken hinter vorauslaufenden Shuttles und einen Positionierungsbetrieb (25) zum Anfahren von der Master-Steuerung vorgegebener Sollpositionen (19).

7. Verfahren nach Anspruch 6, wobei die Shuttles (7) an einer der Sollpositionen (19) bei der Erstinbetriebnahme und/oder nach einer vorgegebenen Anzahl von Pufferumläufen, insbesondere nach jedem Pufferumlauf, in den Initialisierungsbetrieb (27) wechseln und in diesem bezüglich des Streckennullpunkts (17) genullt werden und/oder von der Master-Steuerung (14) eine elektronische Identität (28) zugewiesen bekommen.

8. Verfahren nach Anspruch 6 oder 7, wobei im Initialisierungsbetrieb (27) ferner Information (29) bezüglich geleisteter Betriebsdauer / Fahrstrecke einzelner Shuttles (7) und/oder Abnutzungsindikatoren einzelner Shuttles zwischen den Shuttles und der Master-Steuerung (14) ausgetauscht wird.

9. Verfahren nach einem der Ansprüche 6 bis 8, wobei die Master-Steuerung (14) im Initialisierungsbetrieb (27) ferner eine Bedienerempfehlung zur Entnahme als abgenutzt oder defekt erkannter Shuttles (7) ausgibt und/oder eine automatische Entnahme solcher Shuttles auslöst.

10. Verfahren nach einem der Ansprüche 6 bis 9, wobei die Master-Steuerung (14) den Shuttles (7) von Betriebszuständen und/oder Störungszuständen und/oder Behältereigenschaften abhängige Sollpositionen (19) zum Aufnehmen / Verlassen des Folgebetriebs (26) übermittelt, insbesondere umfassend eine laufende Anpassung der Sollpositionen (19) an Änderungen von Betriebszuständen, Störungszuständen und/oder Behältereigenschaften.

11. Verfahren nach einem der Ansprüche 6 bis 10, wobei die Master-Steuerung (14) den Shuttles (7) von Betriebszuständen und/oder Störungszuständen und/oder Behältereigenschaften abhängige Sollpositionen (19) zum Aufnehmen / Verlassen des Positionierungsbetriebs (25) und/oder Sollpositionen (19) für im Positionierungsbetrieb anzufahrende Streckenpositionen (SP1-SP5) übermittelt, insbesondere umfassend eine laufende Anpassung der Sollpositionen an Änderungen von Betriebszuständen, Störungszuständen und/oder Behältereigenschaften.

12. Vorrichtung (1) zum Puffern einreihig gruppierter Behälter (2) in einer Behälterbehandlungsanlage, insbesondere Abfüllanlage, umfassend: einen Einlaufbereich mit wenigstens einem Einlaufförderband (5a, 5b), einen Auslaufbereich mit wenigstens einem Auslaufförderband (6a), eine sich dazwischen quer in einer Pufferrichtung (PR) erstreckende Pufferfläche (3) und ein über dieser angeordnetes Transportsystem (4), das an Schienen (8) geführte und unabhängig voneinander angetriebene Shuttles (7) mit quer zur Pufferrichtung ausgerichteten und insbesondere paarweise daran vorhandenen Reihenschiebern (9, 10) zum einreihigen Verschieben der Behälter auf der Pufferfläche vom Einlaufbereich (5) in den Auslaufbereich (6) umfasst, **gekennzeichnet durch** ein Steuerungssystem (15) zur Steuerung der Shuttles, des Einlaufförderbands und des Auslaufförderbands in Abhängigkeit von spezifisch für das Format und/oder Material der Behälter gespeicherten Sollpositionen (19), Sollgeschwindigkeiten (V1-V4) und/oder Sollbeschleunigungen/-verzögerungen (21, 22, 23, 24) und/oder zur Steuerung der Shuttles in Abhängigkeit von spezifisch für Betriebsarten (27, 26, 25) zum Initialisieren und insbesondere Auslesen der Shuttles, zum Folgen vorauslaufender Shuttles und zum Anfahren von Streckenpositionen (SP1-SP5) gespeicherten Sollpositionen (19), Sollabständen (20) und/oder Sollgeschwindigkeiten (V1-V4).

13. Vorrichtung nach Anspruch 12, wobei das Steuerungssystem (15) umfasst: an den Shuttles (7) angeordnete Slave-Regelungen (13) für die Antriebe (12) des Shuttles; und eine Master-Steuerung (14) zur betriebsartspezifischen Parametrierung der Slave-Regelungen für Betriebszustände umfassend wenigstens einen automatischen Initialisierungsbetrieb (27) zum Anfahren eines Streckennullpunkts (17) und/oder zur Vergabe einer elektronischen Identität (28) / Adresse an die Shuttles, einen Folgebetrieb (26) zum automatischen Nachrücken hinter vorauslaufenden Shuttles und einen Positionierungsbetrieb (25) zum Anfahren von der Master-Steuerung vorgegebener Streckenpositionen (SP1-SP5).

14. Vorrichtung nach Anspruch 12 oder 13, ferner mit einer im Bereich des Transportsystems (4) angeordneten Initialisierungsstation (16) zum Positionsnullen der Shuttles (7) und/oder zum Zuweisen einer von der Master-Steuerung (14) vergebenen Identität (28) an die Shuttles und/oder zum Auslesen einer geleisteten Betriebsdauer / Fahrstrecke einzelner Shuttles und/oder von Abnutzungsindikatoren einzelner Shuttles für die Master-Steuerung.

15. Vorrichtung nach einem der Ansprüche 12 bis 14, wobei die Reihenschieber (9, 10) quer zur Pufferrichtung verlaufende und sowohl in als auch entgegen der Pufferrichtung (PR) begrenzte Führungskanäle (9c, 10c) zur jeweils einreihigen Aufnahme der Behälter umfassen.
